# EUROPEAN PATENT SPECIFICATION

(11) **EP 2 301 701 B1**
(45) Date of publication and mention of the grant of the patent: **11.11.2015**
(21) Application number: 10180391.4
(22) Date of filing: 27.09.2010
(51) Int. Cl.: B23D 57/00, B28D 1/22, B28D 7/04

(54) **Manual tile cutter for large sized tiles and accessory thereof**
Fliesenschneidvorrichtung für grossformatige Fliesen und Zubehör
Dispositif de coupe de carreaux pour carreaux de larges dimmensions et accessoire

(30) Priority: 28.09.2009 IT MI20091652
(43) Date of publication of application: 30.03.2011
(73) Proprietor: Brevetti Montolit S.P.A., 21050 Cantello (Varese) (IT)
(72) Inventor: Casartelli, Luigi, 21100 Varese (IT); Casartelli, Matteo, 21050 Cantello (Varese) (IT); Montoli, Vincenzo, 21050 Cantello (Varese) (IT)
(74) Representative: Faggioni, Carlo Maria

(56) References cited:
- DE-A1- 4 315 910
- DE-U1- 29 706 236
- GB-A- 2 336 126
- US-A- 5 626 124

## Description

### Field of the Invention

The present invention concerns a manual tile-cutting machine, in particular for cutting large-sized tiles.

### Background Art

As known, manual tile cutters are portable machines intended to perform the cutting of tiles made of ceramic or other stone materials by means of an incision tool which is operated manually.

Typically they have a support base wherefrom at least a pair (head and tail) of terminal posts projects, between which (single-bar or double-bar) guiding means extend for guiding the manual sliding of a tool carrier. Said tool carrier carries, in its lower part closest to the support plane of the base, the actual incision tool, typically shaped as a small sharp wheel of hard metal. The plane of the base typically has also a longitudinal ribbing, arranged in correspondence of the incision line, which acts as abutment for the tile during the tile-breaking phase, when a pressure is applied meant to open the incision. The tile-breaking action is imparted by means of a tile-breaking foot integral with the tool carrier.

In addition to these essential elements, a tile-breaking machine normally has also a scaled rotating square, pivoted on the machine base in an end area, against which the tiles are arranged in order to adjust the position and attitude of the incision line as desired. For such purpose, the square is normally rotating on the resting plane of the base, so as to be able to arrange the tile either with one side perfectly orthogonal to the incision line, and with a certain desired angle.

According to the known art, the base of the manual machine is placed on a horizontal even surface, typically a floor or a support plane, to be able to impart the necessary incision pressure on the tool carrier.

DE29706236U1 discloses a manual tile-cutting system according to the preamble of the attached independent claim 1, where a collapsible structure is provided to keep the frame of the tile cutter always horizzontal, even when the structure is laying on an inclined roof.

In the last few years large-sized tiles have been developed, for example with a side exceeding 50 cm, which have made incision harder. As long as the thicknesses of the tiles are small, tile layers prefer to lay the tiles on large surfaces and use small manual devices, such as glass cutters, to perform the incision, with the assistance of squares and rulers to achieve the desired rectilinear cuts. However, when the thickness of the tiles exceeds a few millimetres (in practice already beyond 2 mm), tile layers must necessarily use stronger and structured tile-cutting machines.

According to the prior art machines suitable to incise large-sized tiles have already been put forward, which are substantially identical to those for standard sizes (20x20 cm), but provided with devices for strengthening and stiffening the structure and particularly the guiding bar of the tool carrier. Machines of this type are, for example, the one disclosed in Italian utility model no. 259746 in the name of Brevetti Montolit S.p.A.

However, these machines have not proven fully satisfactory for cutting very large tiles. As a matter of fact, the extreme length of the guiding bar - necessary for covering the entire tile - leads the operator to work with the tool carrier in uncomfortable and ineffective positions, with the resulting difficulty in applying the desired pressure on the incision tool. It must furthermore be considered that when the tile is also very large, it becomes even difficult for the operator to reach the tool carrier without leaning against or treading on the tile, which impairs the entireness thereof. In this respect it must be borne in mind that in manual machines the operator's wrist position with respect to the tool carrier is decisive for causing a sufficient and constant incision pressure on the underlying tile: whenever the operator tends to work uncomfortably, it is very likely that the applied pressure is uneven or even insufficient.

An uneven incision pressure or having a smaller modulus than required translates into an imperfect incision, which inevitably causes the uneven breaking of the tile in the subsequent tile-breaking phase.

Moreover, when the incision is very long, it is risky to cause the tile break with the traditional localised impulse pressure technique, because the incision risks opening only for a short distance or starting laterally, making the costly tile unusable.

The object of the present invention is hence that of providing an incision system for tiles made of ceramic and of stone material which is suitable to cut large-sized tiles, overcoming the drawbacks of the prior art.

### Summary of the Invention

Such object is achieved through a system as defined in the attached claims.

### Brief Description of the Drawings

Further details on the features and advantages of the device according to the invention will in any case be more evident from the following description of some preferred embodiments of the same, given by way of example and shown in the attached drawings, wherein:
fig. 1 is a perspective view of a first embodiment of the invention, with a support frame provided with a self-contained plane and removable from the incision assembly;
fig. 2 is a perspective view of the system of fig. 1 with the incision machine mounted on the support frame;
fig. 3 is a representation of the system of fig. 2 seen from another perspective;
fig. 4 is an elevation front view of a system according to a second embodiment of the invention;
fig. 5 is a perspective view taken from a base side of the system of fig. 4;
fig. 6 is a perspective view of a detail of the base area of the system of fig. 4;
fig. 7 is a perspective view of a detail of the tool carrier in the system of fig. 4;
fig. 8 is an elevation side view, with the machine in a closed condition lying on the floor;
fig. 9 is a perspective view of a detail of the tool-carrying assembly of fig. 4;
fig. 10 is an elevation side view of the system of fig. 4;
fig. 11 is a perspective view of the disassembled system according to a third embodiment of the invention;
fig. 12 is an elevation front view of the system of fig. 11 assembled and in the a condition for a o° incision;
fig. 13 is an elevation front view of the system of fig. 11 assembled and in a condition for an incision at 45°;
fig. 14 is a perspective view of the system of fig. 11;
fig. 15 is a perspective view of an alternative embodiment of the invention, similar to the one of fig. 1;
fig. 16 is a view like that of fig. 15 with a tile-cutting machine lying on the frame;
fig. 17 is a perspective view of a further embodiment according to the invention in an operating position;
fig. 18 is a view of the machine of fig. 17 in a fold-away transport position;
figs. 19, 20 and 21 are detail views of the retaining system for the tile applied to the embodiment of fig. 17; and
fig. 22 is a view similar to the one of fig. 17 with the retaining system in the attitude of fig. 21.

### Detailed Description of Some Preferred Embodiments

A manual tile cutting system consists, in a way known per se, of a base wherefrom a first and a second posts project, between which (single-bar or double-bar) rail-shaped guiding means lie. On the guiding means there is slidably installed a tool-carrying assembly which carries a incision tool. Said tool is mounted pivoting with respect to the guiding means, so as to be able to be moved closer with pressure to the tile to be cut.

As mentioned, on the base there is furthermore provided a tile-breaking ribbing, arranged longitudinally to the machine in correspondence of the incision line defined by the tool carrier sliding on the guiding means.

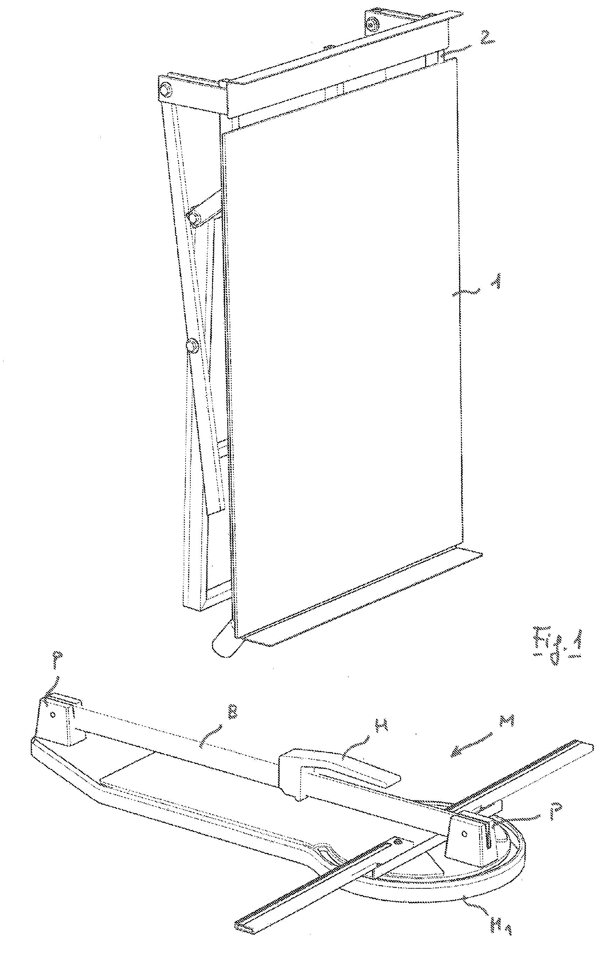

According to a first embodiment of the invention (figs. 1-3) the system base is divided into two distinct components, one of which is a table or frame 1 which can be tilted upwards, mounted on an extendable and collapsible support structure 2, while the other is a base portion M₁ of a traditional tile-cutting machine M. Said last tile-cutting machine comprises the actual incision assembly, consisting of at least two support posts P of the guiding bar B, with relative tool carrier H.

Support structure 2 has two pairs of legs, front ones 2a and rear ones 2b, articulated directly to table or frame 2. Structure 2 is configured so that, when it is fully extended and resting securely on the floor, its plane 1 - which can be tilted upwards - arranges itself with an inclined attitude close to a vertical plane, with a maximum angle of 45° with respect to the vertical.

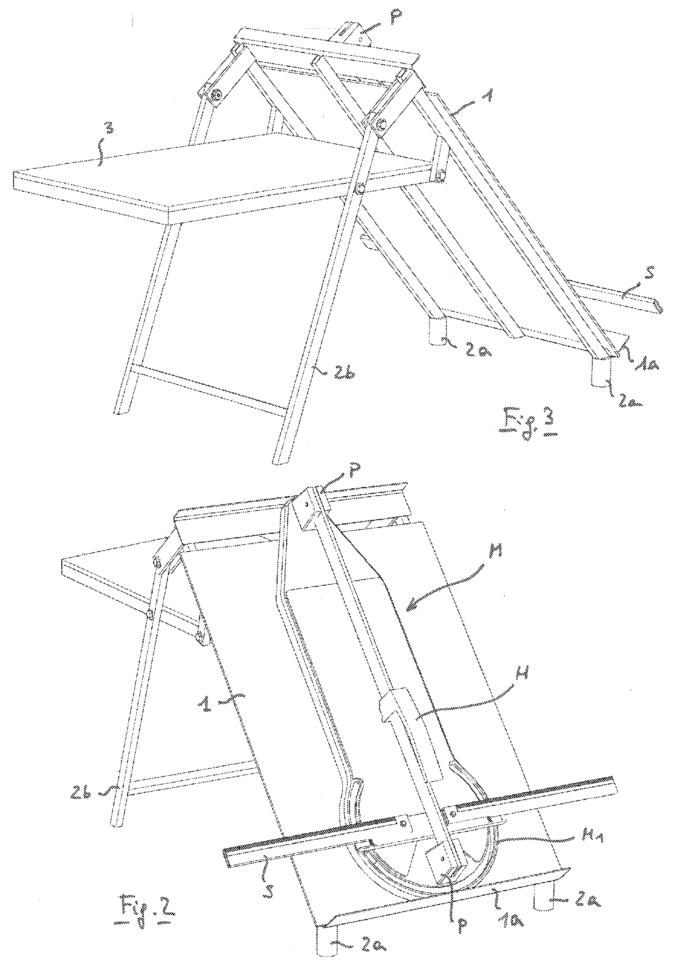

For a reduction of bulk and of the number of components, as shown in fig. 3, two short front legs 2a are fastened to the minor side of structure 2, while two longer rear legs 2b (in the order of magnitude of the major side of the plane) are mounted articulated to the minor side opposite structure 2.

Also in the following, the front side of the frame which can be raised will be defined as the base side, since it is meant to lie in the proximity of the floor, unlike the opposite rear side, which is meant to remain in the high position of the system, during operation.

Preferably, between frame 1 and the longer rear legs 2a, there is mounded a second service plane 3, to be used as supporting plane. Service plane 3, in particular, is articulated in a fixed position behind frame 1 and engages in a translatable position with the pair of long legs 2b, so as to allow a reciprocal movement and hence the folding away of support structure 2. Service plane 3 is intended to arrange itself substantially horizontally, when structure 2 is fully extended and open, as shown in fig. 3. Once folded away, legs 2b and service plane 3 arrange themselves adhering to flat frame 1, so as to reduce bulk and facilitate portability.

In the proximity of the minor base, plane 1 or structure 2 is provided with a raised edge 1a, suitable to act as abutment for base M1.

According to a preferred variant, raised edge 1a is sufficiently tall, for example 10 cm (possibly partly collapsible), and the two lower legs 2a are provided with small wheels (not shown) mounted rotatingly idle. Thereby, once structure 2 has been folded away and machine M has been removed (as shown in fig. 1), frame 1 can act as transport carriage. In other words, on raised edge 1a packs of heavy material (for example boxes of tiles) can be made to abut - partly lying on plane 1; keeping plane 1 inclined with respect to the vertical, the system can be moved on the ground by means of the small wheels, transporting weights effortlessly.

During its operation, the system provides that structure 2 be opened/extended and arranged on the ground, so that plane 1 is standing, i.e. with an angle close to the vertical (in any case with an angle smaller than 45° with respect to the vertical), as shown in figs. 2 and 3. On plane 1 the portion of base M₁ of self-contained machine M is then arranged, so that a part of the abutment square thereof S be arranged in the proximity of the minor base side of plane 1 (in substance, square S lies in the lowest part of machine M).

Machine M abuts below against abutment edge 1a, which prevents the downward sliding thereof.

In this working condition, the tile layer is enormously aided during the incision operation. As a matter of fact, regardless of the tile size, the operator can comfortably work with the tool carrier, imparting the desired pressure. Proceeding with the incision, the operator (also a short one, i.e. shorter than 1.60 m) can simply raise/lower his torso and/or legs, remaining with a constant working attitude, with respect to the tool carrier, for the entire height thereof (therefore, potentially, for an incision line up to 1.5-1.8 metres), thereby favouring pressure evenness of the incision tool on the tile.

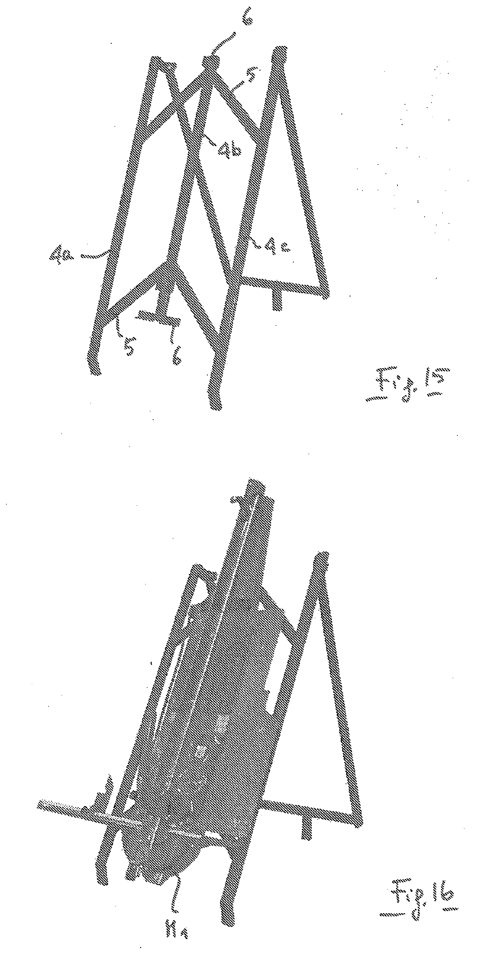

Figs. 15 and 16 show a simplified variant of this first embodiment, wherein neither a resting plane for machine M nor a service plane is provided. In this case, resting frame 1' consists of three parallel bars 4a-4c, arranged longitudinally, joined to each other by connection bars 5. Central bar 4b has adjustable fastening means 6, apt to house and engage with the base M1 of machine M.

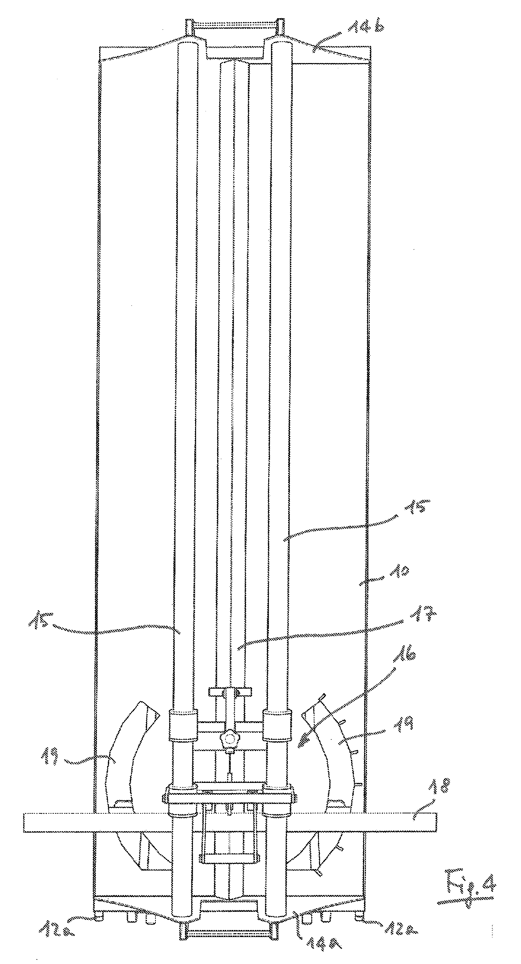

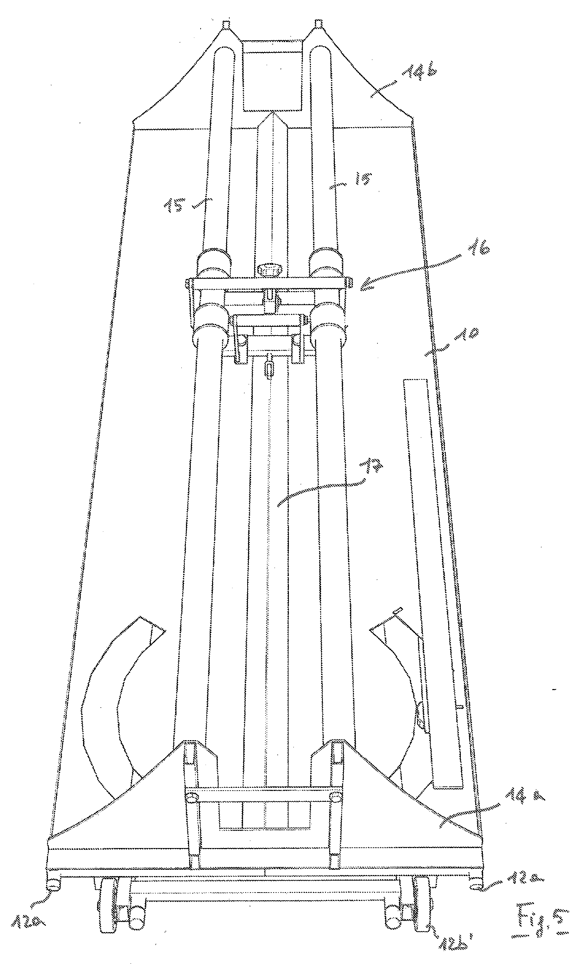

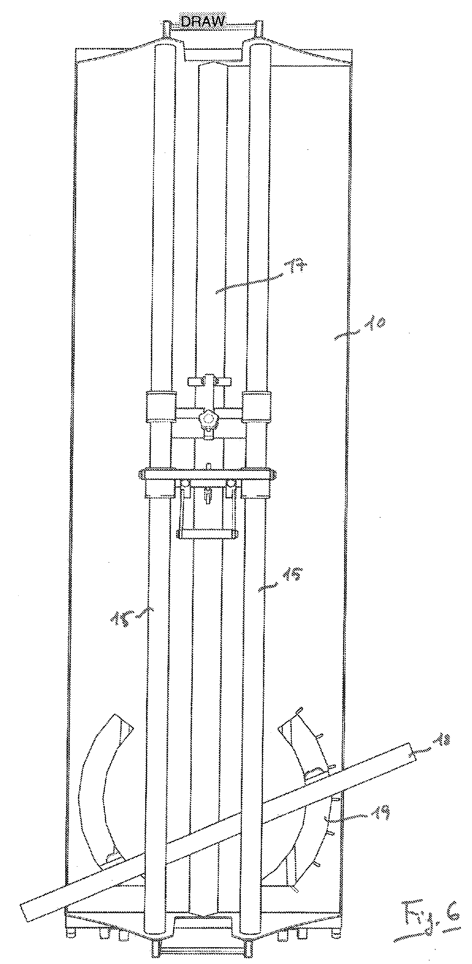

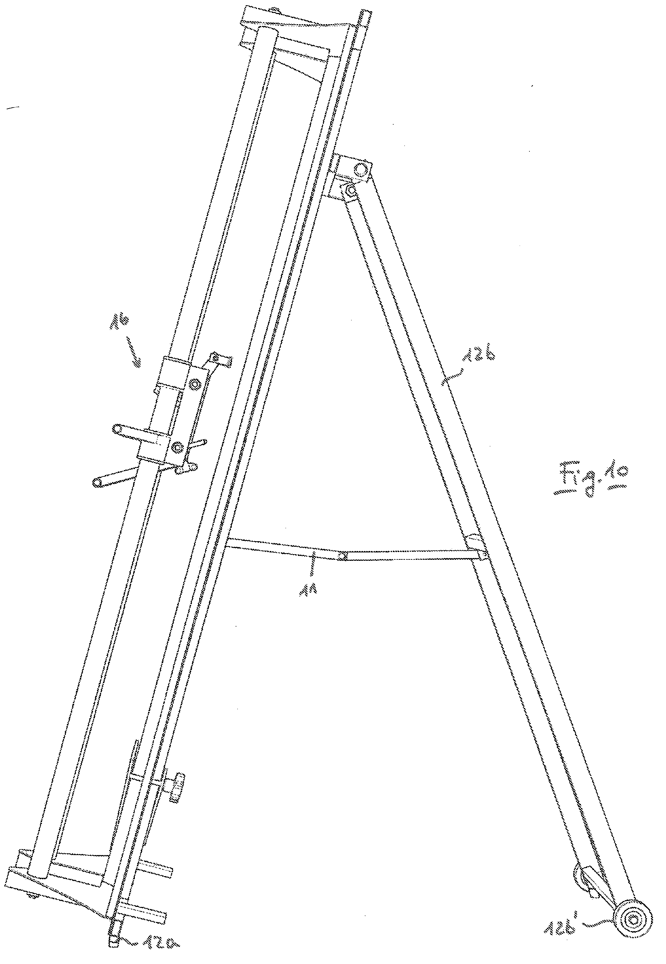

Figs. 4-10 show a second embodiment of the system according to the invention. In this case, the system has a single-piece base 10, connected with a single pair of support legs 12b, which represent the support frame. The minor base side of base 10 is provided, instead of actual support legs, with a pair of support feet 12a, preferably bearing anti-slip rubber caps.

Rear legs 12b are hinged in the proximity of the upper end part of base 10 and are constrained to a central portion of base 10 through a fold-away rod 11. In order to ease the opening of the frame and the transportability of the system, the lower end of legs 12b is provided with small wheels 12b'.

From the two minor sides of the base, a base one and an upper end one, two posts 14a and 14b rise, between which guiding-bar means extend. In the embodiment shown, the guiding-bar means are shaped as a pair of parallel tubular elements 15 whereon a tool-carrier assembly 16 is slidable.

Integral with base 10 there is further provided a longitudinal ribbing 17, arranged matching with the incision line, suitable to act as localised abutment during the tile-breaking phase.

In the proximity of the base side of base 10 there is provided a rotating square device, suitable to act as a rotating tile abutment. The rotating square may have a configuration known per se, but is preferably built according to the teachings of Italian patent application no. MI2009A001651 in the name of the same Applicant. In particular, the rotating square is provided with an abutment bar 18, rotating between guiding-bar means 15 and tile-breaking ribbing 17, coupled with a rocker-arm 18a arranged on the rear side of base 10. The coupling between bar 18 and rocker-arm occurs through a pair of pins which run through the base within two arc-shaped cut-outs 19.

Bar 18, in addition to establishing the tile orientation with respect to the incision line, is intended to act as abutment to support the tile lower edge, when it is laid on the machine on a plane with an attitude close to the vertical.

As a matter of fact, once the system of figs. 4-10 has been opened/extended and raised on the floor, the plane 10 of the base has a nearly vertical attitude. The tile to be cut is introduced between guides 15 and base 10 and arranged, with the lower edge thereof, against rotating bar 18. Bar 18 is provided with locking means, so as to be able to define steadily the attitude thereof with respect to base 10, for example in a perfectly orthogonal state to the incision line.

Should one wish to perform oblique incisions with respect to the reference side (arranged below) of the tile, rotating bar 18 is released in rotation, reoriented according to the desired attitude - hence causing the entire tile to oscillate rightwards or leftwards with respect to the incision line - and then locked before carrying out the incision.

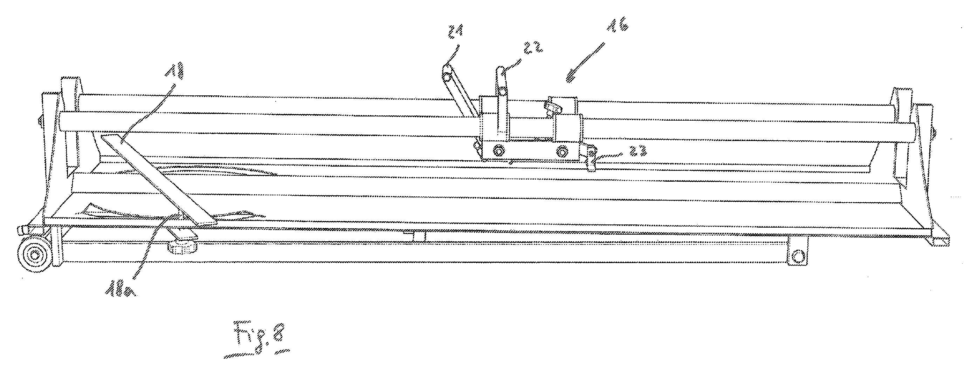

Tool-carrying assembly 16 is better shown in figs. 7-9.

Between two support sleeves 16a and 16b, slidably mounted on tubular elements 15, a slide assembly extends crosswise which supports both an incision tool and a tile-breaking foot. In particular, an incision tool is carried on a push rod 20 which is mounted oscillating with respect to an axis parallel to the plane passing through the two guiding elements 15: the oscillation with respect to this axis leads push rod 20 to move closer to or away from base 10, i.e. from the tile resting thereon. To control the oscillation thereof, push rod 20 is integral with an actuation grip 21, mounted pivoting with respect to the slide assembly, which is arranged between the two tubular elements 15 and whereon the operator can act. In order to facilitate and dose the operator's action, who must push the push rod towards the tile with a certain pressure, grip 21 is arranged in the proximity of another handle 22 which is fixed with respect to the slide assembly. The operator can hence act with one or both hands, causing actuating grip 21 and fixed handle 22 to come closer, applying a force which can be easily kept constant for the entire length of the movement of the slide assembly along guiding elements 15.

Advantageously, in order to obtain a more accurate dosing of the desired pressure, it can be provided to arrange elastic means between grip 21 and handle 22 which, once triggered by the user, can keep constant the force to move closer the two elements and hence the pressure of push rod 20 on the tile to be cut, with no action by the operator.

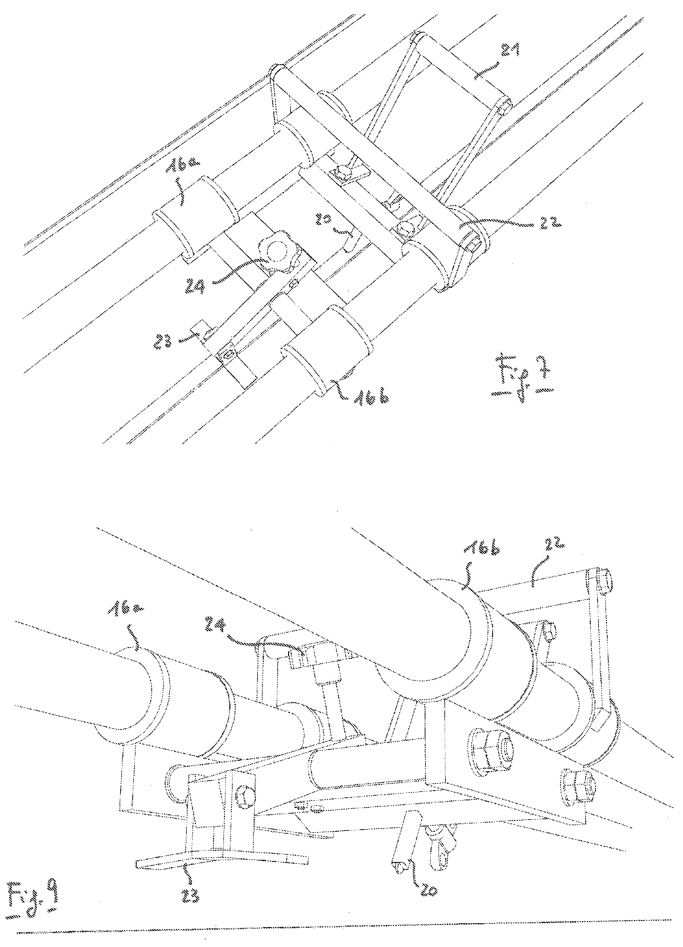

The tile-breaking device consists of a traditional foot 23, mounted oscillating with respect to the slide assembly and movable between a non-interference position with the tile (fig. 9), and a resting position on the tile (fig. 9). In order to impart the desired tile-breaking pressure, foot 23 is controlled via a threaded rod manoeuvred by a knob 24. The user can hence rotate the knob (fig. 9) to lower foot 23 onto the tile, accurately and progressively dosing the applied pressure.

Operatively, at the end of the incision, it is convenient to apply the tile-breaking pressure - acting on knob 24 - in the proximity of an end of the incision on the tile. When the incision has gradually opened to a certain point, the pressure of foot 23 is released, unscrewing knob 24, and the tool-carrying assembly is moved to the position wherein the incision aperture ends. In this new position a tile-breaking pressure is applied again with foot 23 and so on until the opening of the incision along the entire tile length has been completed.

This operation, due to the progressiveness of the pressure which may be imparted through knob 24 and to the fact that one can displace tile-breaking foot 23 along the extension of the incision line, allows to perfectly cut also large-sized tiles made of fragile materials.

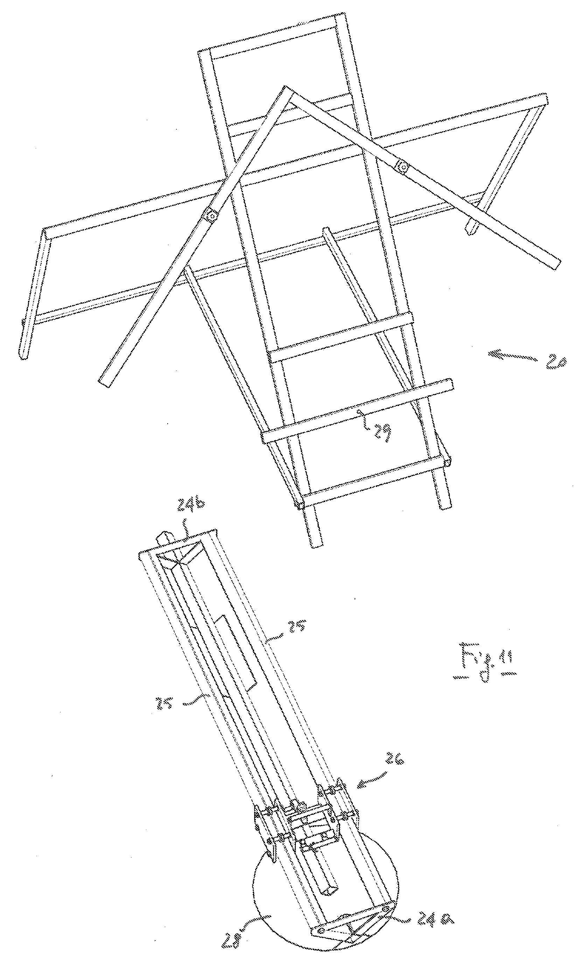

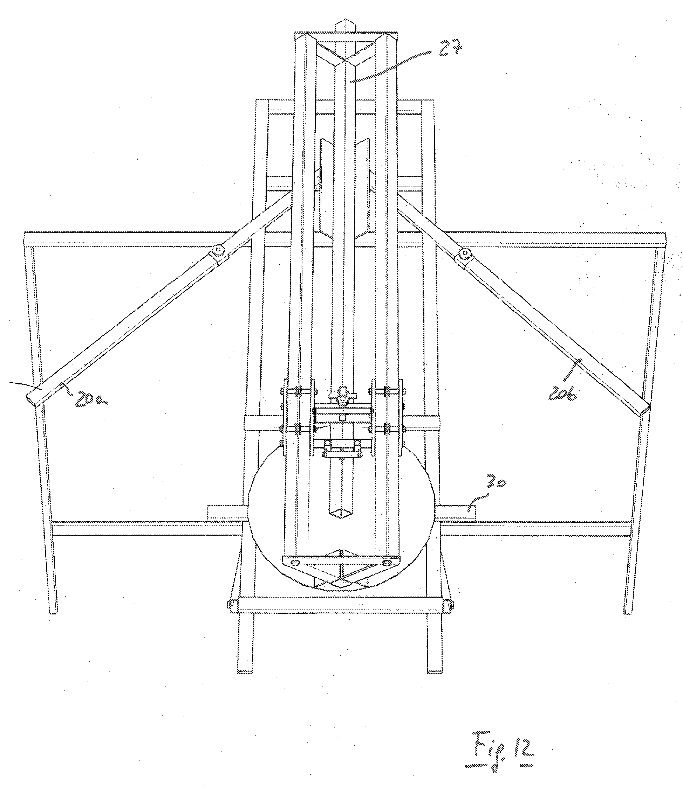

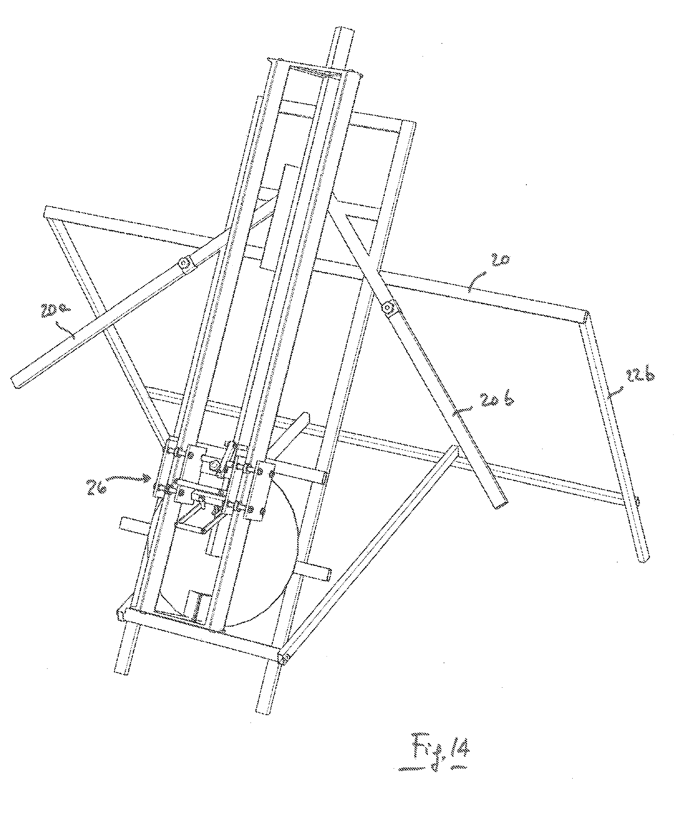

Figs. 11-14 show a third embodiment of the invention.

The system has a support frame 20, itself - like the preceding ones - provided with rear legs 22b articulated so as to make it foldable and reduce the bulk thereof. The frame furthermore has support rods 20a and 20b, which extend laterally with respect to the centre line axis, whereon movable travel end stops are provided, the function of which will be illustrated further on.

In this case, guiding rails 25 of a tool-carrying device 26 are integral with respective end posts 24a and 24b, with a longitudinal tile-breaking ribbing 27, as well as to a flat reinforcement body 28. These mutually integral elements form an incision assembly which may be coupled with or disassembled from frame 20. The incision assembly, to be precise, is designed to be rotatingly mounted on a rotation pin 29 integral with frame 20 in a position next to the lower base side.

Preferably, reinforcement body 28 is rotatingly mounted on pin 29 in a removable way, so as to be able to disassemble (as shown in fig. 11) the incision assembly, comprising guiding bars 25 and tool carrier 26, from the rear frame assembly 20 and facilitate system transportability. According to this embodiment, the system base consists precisely of the reinforcement body 28 with tile-breaking ribbing 27 integral therewith, wherefrom the posts of the guiding bars also depart.

A lower tile abutment bar 30 is mounted, preferably in a removable manner, on frame 20 so as to remain fixed substantially horizontally in the operating position of the system.

In this case, hence, the tile is positioned in a fixed position, with the lower edge abutting against abutment bar 30.

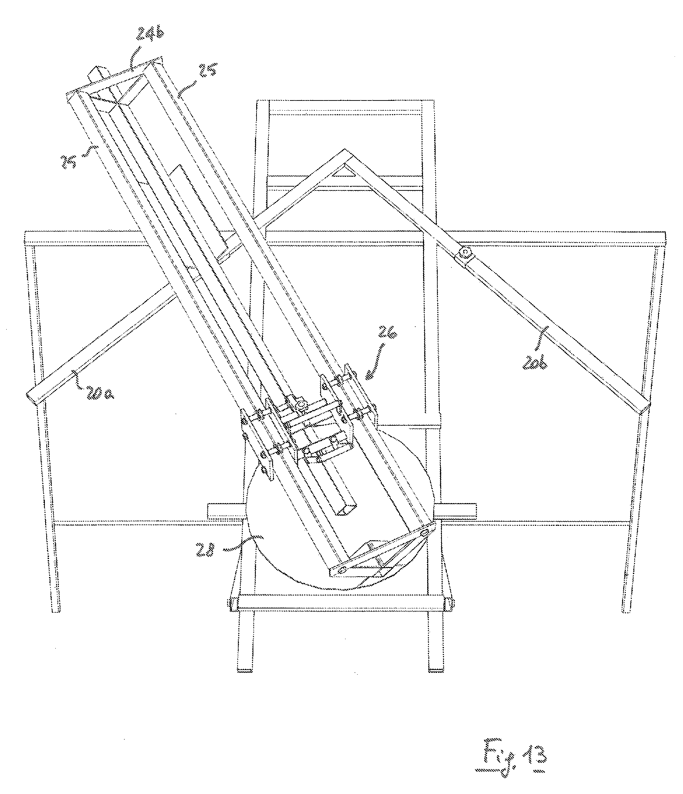

In order to perform oblique cuts with respect to the tile edge, the entire incision assembly, comprising guiding bars 25, ribbing 27 and tool carrier 26, is inclined rightwards or leftwards rotating on pin 29 of frame 20. The travel end position of the rotation is determined by the travel end stops arranged on support rods 20a and 20b, against which, for example, longitudinal ribbing 27 (fig. 13) is intended to abut. By shifting the position of the travel end stops along rods 20a and 20b it is possible to determine the maximum rotation angle of the incision assembly.

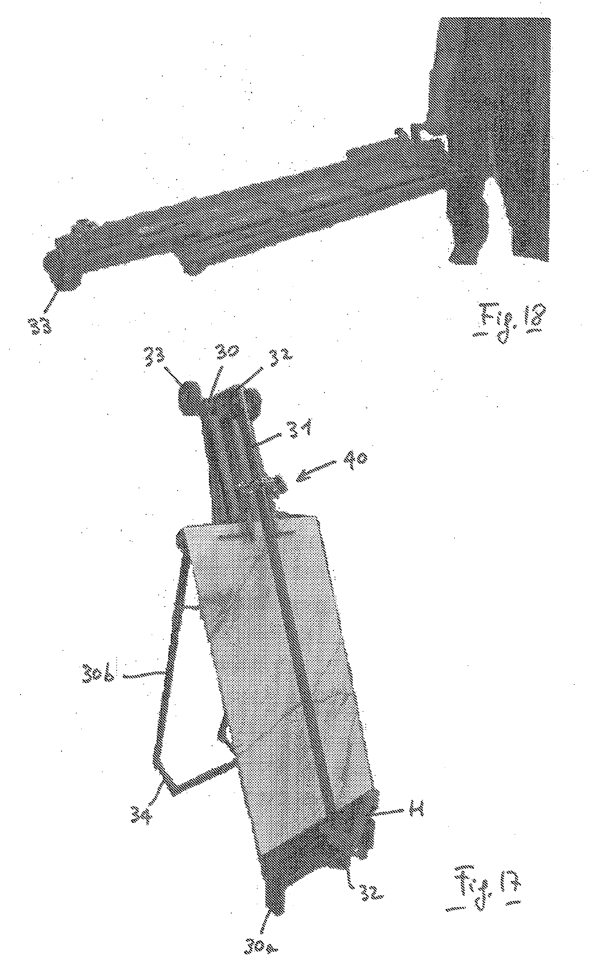

Figs. 17-22 show a fourth embodiment of the invention.

The system has a support frame 30, itself - like the preceding ones - provided with rear legs 30b articulated so as to make it foldable and reducing the bulk thereof. The base side is designed to rest on the floor through short legs 30a.

A guiding rail 31 extends between two posts 32 integral with support frame 30.

At the frame upper end two small wheels 33 are installed to ease transport: for such purpose, the distal end of legs 30b is provided with a handle 34 which, once the frame is folded away, ends on the opposite side of small wheels 33 and makes up a convenient grip for the operator.

Advantageously, a retaining device 40 is furthermore provided, intended to act in the upper part of the tile to support the tile before and after the incision. As a matter of fact, especially after having divided into two parts a large-sized tile, the need exists to keep in balance the tile or its two severed portions, which would otherwise disastrously fall to the floor.

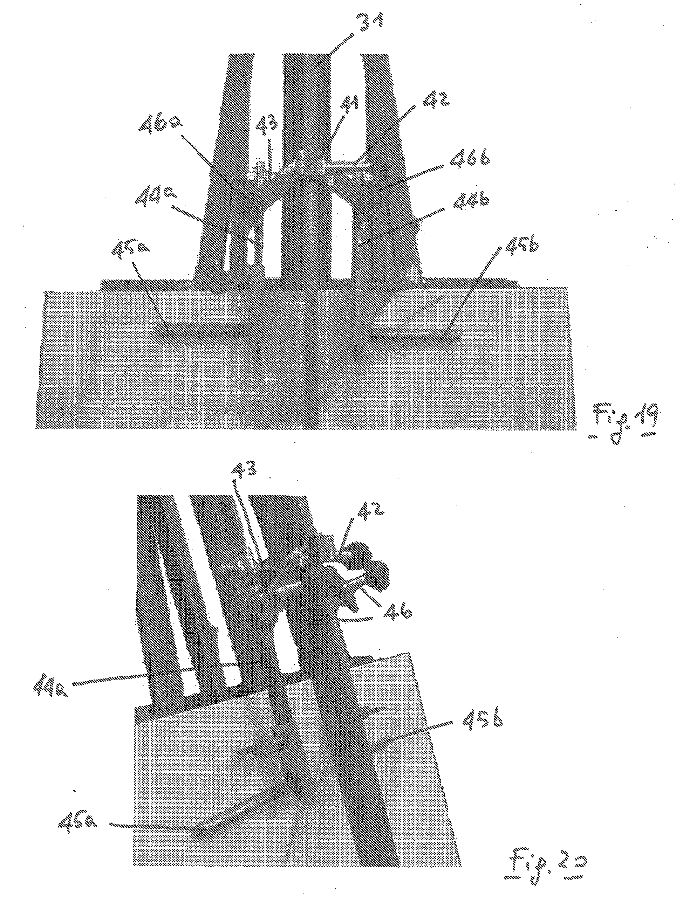

Retaining device 40, as clearly illustrated in fig. 20, comprises a U-shaped bracket 41 suited to slide longitudinally on guiding rail 31. U-shaped bracket 41 can be locked in the desired position along guiding bar 31 - typically in the proximity of the upper tile corner - by clamping means 42.

A support shaft 43 is integral with U-shaped bracket 41 in a position below guiding bar 31, i.e. intended to arrange itself between the bar and the tile during the incision. At the ends of support shaft 43 two rods 44a, 44b supporting corresponding retaining feet 45a and 45b are mounted in a pivoting manner. Two manually-operated pressers are furthermore arranged integrally with U-shaped bracket 41, on both sides of guiding bar B, in correspondence of the two rods 44a and 44b.

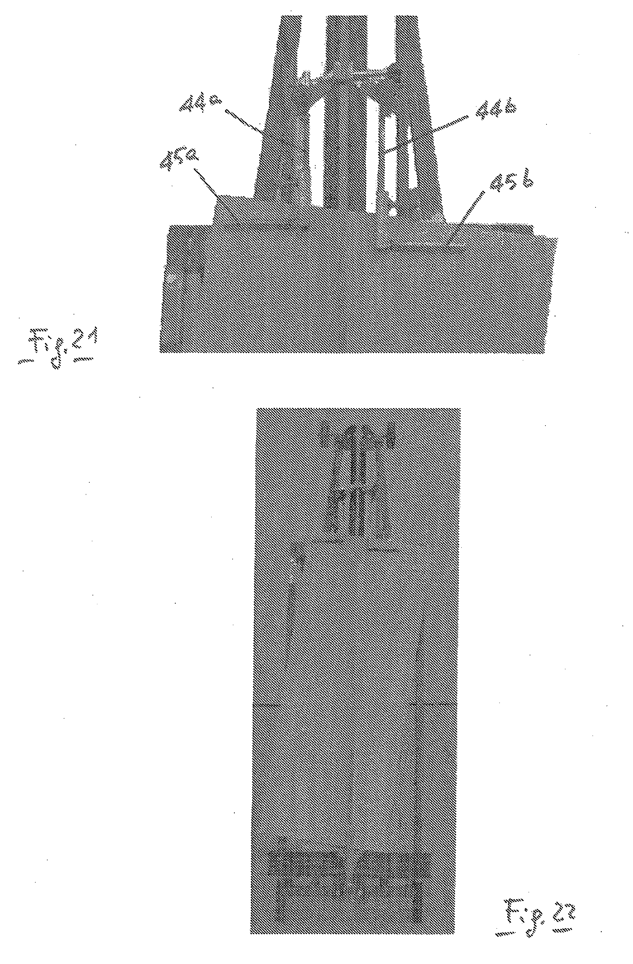

This construction allows to push retaining fee 45a and 45b against the tile, acting on pressers 46a and 46b. By manually dosing the pressure of retaining feet 45a and 45b on the tile, it is possible to keep said tile resting securely against frame 30, so as to prevent it from moving or falling off laterally from the position taken up during incision (fig. 17 or fig. 22).

By using a slightly greater pressure, it is possible to impart the tile a certain stress, which eases the correct severance along the incision line - also for very long tiles - during the tile-breaking phase.

Retaining feet 45a and 45b are particularly useful whenever the tile must be cut in an inclined attitude (fig. 22). Advantageously, precisely in order to better dose and balance the pressure with the inclined tile, retaining feet 45a and 45b are adjustably mounted along support rods 44a and 44b. Thereby they can be applied in two longitudinally offset positions on the machine (fig. 21) and create a correct pressure on the two portions of the inclined Lile.

Evidently, this retaining device 40, although shown applied to this last embodiment of the support frame, is applicable in an equivalent manner also to the second and third embodiment illustrated above.

As can be clearly understood from the above reported description, the system according to the invention represents a cutting machine for large-sized tiles which, despite maintaining portability, remarkably facilitates the (even short) operator's work during the incision phase. The rising frame allows to arrange the tile and the guiding means of the tool carrier in a position close to the vertical, so that the incision may be performed maintaining substantially constant the operator's attitude, hence producing a suitable and steady incision pressure.

The machine thus configured allows to cut very long tiles, up to about 1.5-1.8 m.

The tile, steadily resting both on the system base, and below on the abutment square, may be cut also by a single operator, with no risk that, under its own weight, it may split unevenly or fall to the ground, breaking itself. Moreover, such risk is fully avoided by applying the retaining device described above.

Through the relative rotation which may be established between square and incision assembly, oblique incisions can be easily performed, too.

However, it is understood that the invention is not limited to the particular configurations illustrated above, which represent only a non-limiting example of the scope of the invention, but that a number of variants are possible, all within the reach of a person skilled in the field, without departing from the scope of the invention as defined by the claims.

In particular, while the progressive-action tile-breaking device has proved particularly effective for large-sized tiles, the incision assembly can take up a number of other shapes in addition to those specifically shown in the drawings.

## Claims

1. Manual tile-cutting system, of the type comprising at least one base and one incision assembly comprising guiding means, whereon a tool-carrying device is slidingly mounted, and a longitudinal abutting ribbing (17) aligned on an incision line, the system further comprising a tile alignment square (S), wherein said base is arranged on a table or frame (1, 10, 20, 30) which can be tilted and made to collapse by means of an extendable and collapsible structure (2, 2b, 12, 12b, 11, 22b, 30b, 34) **characterized in that** said structure (2) is configured so that, when it is fully extended and resting securely on the floor, said frame (1) is tilted upwards and arranges itself with an inclined attitude close to a vertical plane, with a maximum angle of 45° with respect to the vertical.

2. System as claimed in claim 1), wherein said extendable and collapsible frame (2) comprises a pair of front legs (2a) and rear legs (2b), at least the rear legs (2b) being hinged to a support table or frame (1) whereon said base (M1) is intended to rest.

3. System as claimed in claim 2), wherein said support table (1) or said structure (2) has a raised edge (1a) along a base side against which said base (M1) is intended to abut.

4. System as claimed in claim 2) or 3), wherein said structure (2) further has a service plate (3), articulated with said rear legs (2b), intended to lie horizontally when said structure (2) is extended.

5. System as claimed in claim 1), wherein said base (10) is directly hinged to collapsible legs (12b) of said structure.

6. System as claimed in claim 5), wherein said alignment square (S) is rotatably mounted on said base (10) in the proximity of a base side thereof and has an abutment ruler (18) against which a tile is intended to abut.

7. System as claimed in claim 5), wherein said alignment square (S) is fixedly mounted to said structure (20) and said incision assembly (24a, 24b, 25, 26, 27) is rotatably mounted on a rotation pin (29) integral with said structure (20).

8. System as claimed in claim 7), wherein said structure (20) has support elements (20a, 20b) of movable travel end stops, suited to determine the travel end of the rotation of said incision assembly (24a, 24b, 25, 26, 27).

9. System as claimed in claim 8), wherein said incision assembly (24a, 24b, 25, 26, 27) is removably mounted on said rotation pin (29).

10. System as claimed in any one of the preceding claims, wherein said tool-carrying device comprises a tile-breaking foot (23) apt to be progressively moved closer to said base by means of a screw/nut-thread system which can be actuated by a knob (24).

11. System as claimed in any one of the preceding claims, wherein said tool-carrying device comprises an incision tool (20), pivoting in a way integral with an actuation grip (21), and a fixed opposition handle (22).

12. System as claimed in claim 11), wherein between said actuation grip (21) and said fixed opposition grip (22) adjustable elastic means are provided.

13. System as claimed in any one of the preceding claims, wherein a retaining device (40) is furthermore provided, which can be arranged along said guiding means (B) and provided with retaining feet (45a, 45b) which can be moved closer to or further away from said base so as to impart a localised pressure on a tile.

14. System as claimed in claim 13), wherein said retaining device (40) comprises a U-shaped bracket (41) which can be fastened along said guiding means (B), with which a rotation shaft (43) for support rods (44a, 44b) of said retaining feet (45a, 45b) is integral.

15. System as claimed in claim 14), wherein on said U-shaped bracket (40) a pair of pressers (46a, 46b), apt to bias into rotation said rods (44a, 44b) rotating about said rotation shaft (43), is furthermore mounted.

16. System as claimed in claim 14) or 15), wherein said retaining feet (45a, 45b) are adjustably mounted in position along said support rods (44a, 44b).

## Patentansprüche

1. Manuelles Fliesenschneidsystem vom Typ mit mindestens einer Basis und einer Schlitzanordnung mit Führungsmitteln, auf denen eine Werkzeugträgereinrichtung gleitend montiert ist und einer longitudinalen Stützverrippung (17), die auf einer Schlitzlinie ausgerichtet ist, wobei das System ferner eine Fliesenausrichtschiene (S) aufweist, wobei die Basis auf einem Tisch oder Rahmen (1, 10, 20, 30) angeordnet ist, der mittels einer ausklappbaren und zusammenklappbaren Struktur (2, 2b, 12, 12b, 11, 22b, 30b, 34) geneigt und zusammengeklappt werden kann, **dadurch gekennzeichnet, dass** die Struktur (2) so konfiguriert ist, dass, wenn sie vollständig ausgeklappt ist und sicher auf dem Boden ruht, der Rahmen (1) nach oben geneigt ist und sich selbst in einer schrägen Stellung nahe in einer vertikalen Ebene, mit einem maximalen Winkel von 45° in Bezug auf die Vertikale, aufrichtet.

2. System nach Anspruch 1, wobei der ausklappbare und zusammenklappbare Rahmen (2) ein Paar vordere Beine (2a) und hintere Beine (2b) aufweist, wobei zumindest die hinteren Beine (2b) an einem Auflagetisch oder -rahmen (1), auf dem die Basis (M1) ruhen soll, gelenkig gelagert sind.

3. System nach Anspruch 2, wobei der Auflagetisch (1) oder die Struktur (2) eine erhöhte Kante (1a) entlang einer Basisseite aufweist, an der die Basis (M1) anliegen soll.

4. System nach Anspruch 2 oder 3, wobei die Struktur (2) ferner eine Arbeitssplatte (3) aufweist, die mit den hinteren Beinen (2b) gelenkig verbunden ist und horizontal liegen soll, wenn die Struktur (2) ausgeklappt ist.

5. System nach Anspruch 1, wobei die Basis (10) an zusammenklappbaren Beinen (12b) der Struktur direkt gelenkig gelagert ist.

6. System nach Anspruch 5, wobei die Ausrichtschiene (S) auf der Basis (10) in der Nähe einer Basisseite derselben drehbar montiert ist und ein Anlagelineal (18) aufweist, an dem eine Fliese anliegen soll.

7. System nach Anspruch 5, wobei die Ausrichtschiene (S) an der Struktur (20) fest montiert ist und die Schlitzanordnung (24a, 24b, 25, 26, 27) an einem Drehzapfen (29) integral mit der Struktur (20) drehbar montiert ist.

8. System nach Anspruch 7, wobei die Struktur (20) Stützelemente (20a, 20b) von beweglichen Bewegungsendanschlägen aufweist, die geeignet sind, um das Bewegungsende der Drehung der der Schlitzanordnung (24, 24b, 25, 26, 27) zu bestimmen.

9. System nach Anspruch 8, wobei die Schlitzanordnung (45a, 34b, 25, 26, 27) an dem Drehzapfen (29) lösbar montiert ist.

10. System nach einem der vorangehenden Ansprüche, wobei die Werkzeugträgereinrichtung einen Fliesenbrechfuß (23) aufweist, der gestaltet ist, um mittels eines Schneckengewindesystems, das durch einen Knopf (24) betätigt werden kann, zunehmend näher zur Basis bewegt werden zu können.

11. System nach einem der vorangehenden Ansprüche, wobei die Werkzeugträgereinrichtung ein Schlitzwerkzeug (20), das in einer mit einem Betätigungsgriff (21) integralen Weise schwenkt, und einen feststehenden Gegengriff (22) aufweist.

12. System nach Anspruch 11, wobei zwischen dem Betätigungsgriff (21) und dem feststehenden Gegengriff (22) einstellbare elastische Mittel vorgesehen sind.

13. System nach einem der vorangehenden Ansprüche, wobei ferner eine Halteeinrichtung (40) vorgesehen ist, die entlang der Führungsmittel (B) angeordnet werden kann und mit Haltefüßen (45a, 45b) versehen ist, die näher zur Basis oder davon weiter weg bewegt werden können, um einen lokalen Druck auf eine Fliese auszuüben.

14. System nach Anspruch 13, wobei die Halteeinrichtung (40) einen U-förmigen Träger (41) aufweist, der entlang der Führungsmittel (B) befestigt werden kann, mit dem eine Drehachse (43) für Haltestangen (44a, 44b) der Haltefüße (45a, 45b) integral ausgebildet ist.

15. System nach Anspruch 14, wobei auf dem U-förmigen Träger (40) ferner ein Paar Presser (46a, 46b) montiert ist, die gestaltet sind, um die Stangen (44a, 44b) in Drehung zum Drehen um die Drehachse (43) vorzuspannen.

16. System nach Anspruch 14 oder 15, wobei die Haltefüße (45a, 45b) entlang der Haltestangen (44a, 44b) positionsverstellbar montiert sind.

## Revendications

1. Système de coupe de carreaux manuel, du type comprenant, au moins un ensemble base et un ensemble incision comprenant un moyen de guidage, sur lequel un dispositif porte-outil est monté coulissant, et un nervurage de butée longitudinal (17) aligné sur une ligne d'incision, le système comprenant, en outre, une équerre d'alignement de carreau (S), ladite base étant agencée sur un plateau ou un châssis (1, 10, 20, 30) qui peut être incliné et amené à se plier au moyen d'une structure extensible et pliante (2, 2b, 12, 12b, 11, 22b, 30b, 34) **caractérisé en ce que** ladite structure (2) est configurée de manière que, lorsqu'elle est complètement déployée et repose fermement sur le sol, ledit châssis (1) soit incliné vers le haut et se place avec une inclinaison proche d'un plan vertical, avec un angle maximum de 45°C par rapport à la verticale.

2. Système selon la revendication 1, dans lequel ledit châssis extensible et pliant (2) comprend une paire de jambages avant (2a) et des jambages arrière (2b), au moins les jambages arrière (2b) étant articulés sur un plateau ou châssis de support (1) sur lequel ladite base (M1) est destinée à reposer.

3. Système selon la revendication 2, dans lequel ledit plateau de support (1) ou ladite structure (2) comporte un bord exhaussé (1a) le long d'un côté de base contre lequel ladite base (M1) est destinée à buter.

4. Système selon la revendication 2 ou 3, dans lequel ladite structure (2) comporte, en outre, une plaque de service (3), articulée avec lesdits jambages arrière (2b), destinée à se trouver horizontale lorsque ladite structure (2) est déployée.

5. Système selon la revendication 1, dans lequel ladite base (10) est directement articulée à des jambages pliables (12b) de ladite structure.

6. Système selon la revendication 5, dans lequel ladite équerre d'alignement (S) est montée rotative sur ladite base (10) à proximité d'un côté de la base et comporte une règle de butée (18) contre laquelle un carreau est destiné à buter.

7. Système selon la revendication 5, dans lequel ladite équerre d'alignement (S) est montée fixement sur ladite structure (20) et ledit ensemble incision (24a, 24b, 25, 26, 27) est monté rotatif sur un axe de rotation (29) d'un seul tenant avec ladite structure (20).

8. Système selon la revendication 7, dans lequel ladite structure (20) comporte des éléments de support (20a, 20b) de butées de fin de course mobiles, aptes à déterminer la fin de course de la rotation dudit ensemble incision (24a, 24b, 25, 26, 27).

9. Système selon la revendication 8, dans lequel ledit ensemble incision (24a, 24b, 25, 26, 27) est monté amovible sur ledit axe de rotation (29).

10. Système selon l'une quelconque des revendications précédentes, dans lequel ledit dispositif porte-outil comprend un pied de rupture de carreau (23) apte à être progressivement rapproché de ladite base au moyen d'un système vis-écrou qui peut être actionné par un bouton (24).

11. Système selon l'une quelconque des revendications précédentes, dans lequel ledit dispositif porte-outil comprend un outil d'incision (20), pivotant d'un seul tenant avec une prise d'actionnement (21), et une poignée opposée fixe (22).

12. Système selon la revendication 11, dans lequel, entre ladite prise d'actionnement (21) et ladite poignée opposée fixe (22), sont prévus des moyens élastiques réglables.

13. Système selon l'une quelconque des revendications précédentes, dans lequel un dispositif de retenue (40) est, en outre, prévu, qui peut être agencé le long dudit moyen de guidage (B) et pourvu de pieds de retenue (45a, 45b) qui peuvent être rapprochés ou éloignés de ladite base afin d'appliquer une pression localisée sur un carreau.

14. Système selon la revendication 13, dans lequel ledit dispositif de retenue (40) comprend une console en U (41) qui peut être fixée le long dudit moyen de guidage (B), avec laquelle un arbre de rotation (43) pour tiges de support (44a, 44b) desdits pieds de retenue (45a, 45b) est d'un seul tenant.

15. Système selon la revendication 14, dans lequel, sur ladite console en U (40) est, en outre, montée une paire de dispositifs presseurs (46a, 46b), apte à solliciter en rotation lesdites tiges (44a, 44b) tournant autour dudit arbre de rotation (43).

16. Système selon la revendication 14 ou 15, dans lequel lesdits pieds de retenue (45a, 45b) sont montés de manière réglable en position le long desdites tiges de support (44a, 44b).
